# EUROPÄISCHE PATENTSCHRIFT

(11) **EP 0 600 924 B1**
(45) Veröffentlichungstag und Bekanntmachung des Hinweises auf die Patenterteilung: **28.02.1996**
(21) Anmeldenummer: 92916113.1
(22) Anmeldetag: 06.08.1992
(51) Int. Cl.: B29C 47/76

(54) **VORRICHTUNG ZUM EXTRUDIEREN VON THERMOPLASTISCHEM KUNSTSTOFFGUT**
DEVICE FOR EXTRUDING THERMOPLASTIC MATERIAL
DISPOSITIF POUR L'EXTRUSION DE PRODUITS THERMOPLASTIQUES

(30) Priorität: 29.08.1991 AT 1709/91
(43) Veröffentlichungstag der Anmeldung: 15.06.1994
(73) Patentinhaber: BACHER, Helmut, A-4490 St. Florian (AT); SCHULZ, Helmuth, A-4490 St. Florian (AT); WENDELIN, Georg, A-4033 Linz (AT)
(72) Erfinder: BACHER, Helmut, A-4490 St. Florian (AT); SCHULZ, Helmuth, A-4490 St. Florian (AT); WENDELIN, Georg, A-4033 Linz (AT)
(74) Vertreter: Wildhack, Helmut, Dipl.-Ing. Dr.
(86) Internationale Anmeldenummer: AT9200110
(87) Internationale Veröffentlichungsnummer: WO9304841

(56) Entgegenhaltungen:
- FR-A- 1 579 277
- FR-E- 92 898
- US-A- 3 360 824

## Beschreibung

Die Erfindung betrifft eine Vorrichtung zum Extrudieren von thermoplastischem Kunststoffgut, mit einem Extrudergehäuse, in dem eine durch eine Antriebsvorrichtung angetriebene Extruderschnecke um ihre Achse drehbar gelagert ist, und das mit einer, beispielsweise mit einem Trichter verbundenen, Aufgabeöffnung für das zu plastifizierende Gut und mit einer in axialem Abstand von dieser angeordneten Austrittsöffnung für die Schmelze versehen ist und wenigstens eine Entgasungsöffnung für das Entweichen von Gasen sowie wenigstens ein Schmelzefilter aufweist, durch welches die Schmelze hindurchtritt, wobei das Extrudergehäuse durch ein am Schneckenumfang vorgesehenes Rückfördergewinde in zwei Kammern unterteilt ist, von welchen eine die Aufgabeöffnung und die andere die Austrittsöffnung aufweist, und die durch wenigstens einen Kanal miteinander verbunden sind, in welchem das Schmelzefilter angeordnet ist, und wobei jede Entgasungsöffnung mit der die Austrittsöffnung aufweisenden Kammer verbunden und in axialem Abstand von dieser Austrittsöffnung angeordnet ist, in welcher Kammer die Extruderschnecke eine eine Druckloszone bewirkende Ganggeometrie hat.

Derartige Vorrichtungen sind bekannt (US-A 3,360.824). Die aus der Austrittsöffnung austretende Schmelze wird hiebei einem Werkzeug, z.B. einer Form, zugeführt, in welchem Gegenstände aus thermoplastischen Kunststoff hergestellt werden.

Es ist auch bekannt, Kunststoffabfall einem Recycling-Prozeß dadurch zu unterwerfen, daß der Kunststoffabfall durch die Aufgabeöffnung dem Extrudergehäuse zugeführt und darin aufgeschmolzen und mittels des Filters von den Verunreinigungen gereinigt wird. Hiebei ergibt sich das Problem, daß einerseits die im Kunststoffabfall enthaltenen Verunreinigungen entfernt werden müssen, anderseits aber bei der Plastifizierung freiwerdende Gase abgeführt werden müssen, die z.B. dadurch entstehen, daß auf den Kunststoffabfällen aufgebrachte Druckfarben bei einer bestimmten Temperatur gasförmige Bestandteile abgeben oder sogar zur Gänze in den gasförmigen Zustand übergehen. Zur Abfuhr von solchen gasförmigen Bestandteilen ist bei der bekannten Konstruktion eine Entgasungsöffnung vorgesehen, welche - gesehen in Strömungsrichtung des Kunststoffmateriales - unmittelbar nach dem das Filter darstellenden Sieb angeordnet ist. Das gereinigte und entgaste Kunststoffmaterial wird dann in die zweite Kammer eingebracht und durch diese der Austrittsöffnung zugeführt. Untersuchungen haben ergeben, daß eine solche Vorrichtung den an sie gestellten Anforderungen nicht genügt. Die Untersuchungen haben gezeigt, daß die Entgasung des behandelten Kunststoffmateriales ungenügend ist, zumal ja das Kunststoffmaterial beim Hindurchtritt durch das Filter durchwirbelt wird, wodurch allfällige bereits aus dem Kunststoffmaterial ausgetretene oder knapp davorstehende gasförmige Bestandteile wieder in die Kunststoffmasse eingearbeitet werden.

Es ist auch bekannt, bei einer einteiligen Schnecke, welche also nur in einer einzigen Kammer angeordnet ist, ein den Kunststoff reinigendes Filter unmittelbar vor der Austrittsöffnung anzuordnen. Die Entgasungsöffnungen befinden sich hiebei vor dem Filter, so daß sich auch nach der Entgasung noch Verunreinigungen in der Schmelze befinden. Vor dem Filter bzw. der Austrittsöffnung muß die Extruderschnecke eine solche Steigung aufweisen, daß dar nötige Förderdruck aufgebracht wird, um die durch das Filter und das an die Austrittsöffnung angeschlossene Werkzeug bewirkten Widerstände zu überwinden. Es hängt somit von der Geometrie der Extruderschnecke in diesen Bereich ab, welcher maximale Widerstand gerade noch überwunden werden kann. Wird dieser maximale Widerstand überschritten, beispielsweise infolge verschmutzter Filtersiebe, so wird die Austragung der Schmelze durch die Austrittsöffnung vermindert und es ergibt sich ein Schmelzerückstau, der einen unerwünschten Schmelzeaustritt aus den Entgasungsöffnungen bewirkt.

Andere bekannte Vorrichtungen weisen noch weitere Nachteile auf. So ist der Einsatz von feinmaschigen Filtersieben, wie er für die Erzeugung von qualitativ hochwertigen Endprodukten zweckmäßig ist, abhängig von der Schmelzeviskosität des Kunststoffgutes, der Gesamtfiltrieroberfläche und dem Durchsatz, und daher begrenzt. Des weiteren kann es bei den bekannten Vorrichtungen zur Bildung von Gasen aus den in der Schmelze befindlichen Verunreinigungen kommen, nachdem diese Schmelze die Entgasungsöffnungen passiert hat, so daß dann ein nicht vollständig entgastes Endprodukt erhalten wird. Gleiches gilt für Inhomogenitaten in der Schmelze, die die Entgasungsöffnungen in unaufgeschmolzenem Zustand passieren und erst später aufgeschmolzen werden und daher erst dann zu entgasen beginnen.

Die vorliegende Erfindung hat sich zur Aufgabe gestellt, die Nachteile der bekannten Vorrichtungen zu vermeiden und eine Vorrichtung zum Extrudieren von thermoplastischem Kunststoffgut zu schaffen, bei welcher kein Materialaustritt aus den Entgasungsöffnungen erfolgt und alle Verunreinigungen und Inhomogenitäten bereits vor der Entgasung abgefiltert werden, wobei aber dennoch eine verläßliche Entgasung des Kunststoffmateriales stattfindet. Zur Lösung dieser Aufgabe schlägt die Erfindung, ausgehend von der eingangs beschriebenen bekannten Vorrichtung, vor, daß jede. Entgasungsöffnung - in Transportrichtung des Kunststoffgutes gesehen - hinter der Einmündung jedes Kanales in die die Austrittsöffnung aufweisende Kammer liegt, wobei die Druckloszone zwischen dieser Einmündung und jeder Entgasungsöffnung liegt, und daß die Einmündung jedes Kanales in die die Austrittsöffnung aufweisende Kammer unmittelbar neben dem Rückfördergewinde liegt. Die Entgasung des Kunststoffmateriales erfolgt somit erst dann, wenn das Kunststoffmaterial nach Passieren des Schmelzefilters wieder in das Schneckengehäuse eingebracht wurde. Vom Zeitpunkt des Passierens des Schmelzefilters bis zu der Entgasungsöffnung bzw. den Entgasungsöffnungen haben die im Kunststoffmaterial enthaltenen Gase genügend Zeit, aus dem Kunststoffmaterial auszutreten, zumal das Kunststoffmaterial während dieser Zeit keiner wesentlichen Druckbeanspruchung unterworfen ist, da es sich ja über diese Zeitspanne in der Druckloszone der Extruderschnecke befindet, welche Zone gemäß der Erfindung - gesehen in Strömungsrichtung des Kunststoffmateriales - vor den Entgasungsöffnungen liegt, bei der eingangs beschriebenen Vorrichtung hingegen nach der Entgasungsöffnung.

Die Anordnung der Einmündungen jedes das filtrierte Kunststoffmaterial führenden Kanales in die zur Austrittsöffnung führende Kammer unmittelbar neben dem Rückfördergewinde sichert, daß das Rückfördergewinde verläßlich mit Kunststoffmaterial versorgt wird. Dieser Vorteil ist bei der eingangs beschriebenen bekannten Konstruktion nicht gegeben, denn dort liegt die Öffnung, über welche das filtrierte Material wieder in das Schneckengehäuse eingeleitet wird, um etwa eine halbe Ganghöhe des Gewindes der Extruderschnecke versetzt. Die Extruderschnecke hat daher die Tendenz, das Material von dem Rückfördergewinde wegzufördern, so daß das Rückfördergewinde nicht ausreichend mit Kunststoffmaterial versorgt werden kann. Dies hat eine nur unzuverlässige gegenseitige Abdichtung der beiden Kammern zur Folge und es besteht die Gefahr eines Trockenlaufes des Rückfördergewindes. Beim Erfindungsgegenstand sind diese Nachteile mit Sicherheit vermieden und es wird außerdem der Vorteil erzielt, daß die Gänge des Rückfördergewindes laufend mit bereits filtriertem Material gereinigt werden, so daß im Bereich des Rückfördergewindes keine Verkrackung des Kunststoffes auftreten kann.

Die Anordnung der Entgasungsöffnungen in Abstand von den Kunststofffiltern bzw. die dadurch bewirkte Entgasung des Kunststoffmateriales erst zu einem wesentlich späteren Zeitpunkt, als die Schmelze die Schmelzefilter passiert, sichert den Vorteil, daß bei einem allfälligen Rückstau infolge einer Blockierung eines Schmelzefilters kein Material aus den Entgasungsöffnungen austreten kann. Dadurch, daß Inhomogenitäten und Verunreinigungen aus der Schmelze entfernt werden, bevor diese zu den Entgasungsöffnungen gelangt, wird auch vermieden, daß eine weitere Gasbildung nach dem Passieren dieser Entgasungsöffnungen erfolgt. Schließlich weist die erfindungsgemäße Ausbildung den Vorteil auf, daß der Förderdruck im Bereich der Austrittsöffnung für die Schmelze reduziert wird, da lediglich der Werkzeugwiderstand überwunden werden muß.

In bekannter Weise ist ein Rückfördergewinde ein Dichtgewinde mit geringer, dem Schneckengewinde entgegengesetzter Steigung. Durch dieses Rückfördergewinde wird ein geringer Anteil beispielsweise von etwa 1 bis 1,5% der Schmelze aus der die Austrittsöffnung und die Entgasungsöffnung aufweisenden Kammer in die die Aufgabeöffnung aufweisende Kammer rückgefördert. Dadurch wird auf jeden Fall verhindert, daß verunreinigtes Kunststoffgut unmittelbar unter Umgehung des Schmelzefilters in die die Austrittsöffnung und die Entgasungsöffnung aufweisende Kammer gelangt.

Gemäß einer bevorzugten Ausführungsform der Erfindung ist auch die Eintrittsöffnung jedes Kanales, welcher von der die Aufgabeöffnung aufweisenden Kammer zu einem Schmelzefilter führt, unmittelbar neben dem Rückfördergewinde angeordnet. Dies vermeidet Toträume, in welchen sich das Kunststoffgut absetzen und dadurch längere Zeit in der Vorrichtung verbleiben kann, was zu thermischen Schädigungen des Kunststoffgutes führt.

Gemäß einer bevorzugten Ausführungsform der Erfindung reicht die Druckloszone der Extruderschnecke bis zu den Entgasungsöffnungen, wobei die Extruderschnecke im Anschluß an die Druckloszone eine eine Austragzone bewirkende Ganggeometrie aufweist, die bis zur Austrittsöffnung reicht. Auf diese Weise wird dem Kunststoffmaterial die größtmöglichste Zeit zur Entspannung zwecks Entgasung gelassen und anderseits an der Austrittsöffnung gesichert, daß dort die Schmelze mit dem erforderlichen Druck in das Werkzeug übergeführt wird. Die Druckloszone schließt hiebei zweckmäßig unmittelbar an die Einmündung des Kanales an, welcher in die die Austrittsöffnung aufweisende Kammer mündet, um eine maximale Länge der Druckloszone sicherzustellen.

Um die Vorrichtung auch für sie Verarbeitung solcher Kunststoffsorten einsetzen zu können, bei welchen keine Entgasung erforderlich ist, ist gemäß einer Weiterbildung der Erfindung zumindest eine Entgasungsöffnung verschließbar.

Um Toträume zu vermeiden, ist es im Rahmen der Erfindung zweckmäßig, wenn die Wand der Einlaßöffnung bzw. der Einmündung des Kanales mit der Stirnfläche des das Rückfördergewinde aufweisenden Abschnittes der Extruderschnecke fluchtet.

Um jene Abschnitte des Kanales, welche das Extrudergehäuse durchsetzen, einfach herstellen zu können, ist es im Rahmen der Erfindung zweckmäßig, wenn die Kanalabschnitte, welche die Einlaßöffnungen bzw. die Einmündungen aufweisen, radial im Extrudergehäuse verlaufen.

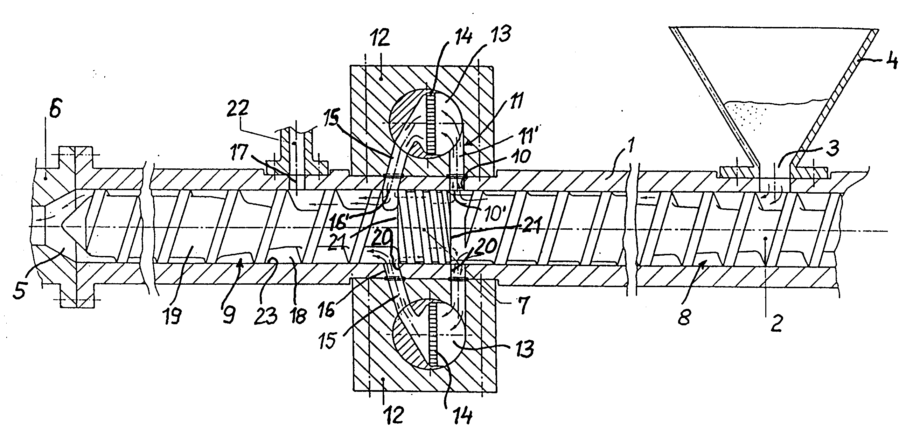

In der Zeichnung ist die Erfindung anhand eines Ausführungsbeispieles schematisch veranschaulicht, das die erfindungsgemäße Vorrichtung in einem Längsschnitt zeigt.

Diese Vorrichtung weist ein Extrudergehäuse 1 auf, in dem eine durch eine nicht dargestellte Antriebsvorrichtung angetriebene Extruderschnecke 2 um ihre Achse drehbar gelagert ist. Über eine Aufgabeöffnung 3, die mit einem Aufgabetrichter 4 in Verbindung steht, wird das zu plastifizierende Kunststoffgut der Förderschnecke 2 zugeführt. Die durch die Plastifizierung entstehende Schmelze tritt über eine Austrittsöffnung 5 aus dem Gehäuse 1 aus, an welche Austrittsöffnung ein Werkzeug 6 angeschlossen ist.

Die Schnecke 2 ist in axialen Abstand von der Eintrittsöffnung 3 und von der Austrittsöffnung 5 mit einem Rückfördergewinde 7 versehen, das eine der Steigung der Schnecke 2 entgegengesetzte Steigung aufweist, die geringer ist als die Steigung der Schnecke 2 und eine Abdichtung zwischen der Umfang der Schnecke 2 und der Innenwand des Extrudergehäuses 1 bewirkt, so daß in diesem Extrudergehäuse zwei Kammern 8,9 gebildet werden. In der Kammer 8, die mit der Aufgabeöffnung 3 in Verbindung steht, weist die Extruderschnecke eine solche Konfiguration (Gangtiefe, Steigung) auf, daß eine Plastifizierung des Kunststoffgutes erfolgt und der erforderliche Druck zur Überwindung des Filterwiderstandes aufgebaut wird. An Ende der Kammer 8, unmittelbar dem Rückfördergewinde 7 benachbart, sind in der Wand des Extrudergehäuses 1 Mündungen 10' von radial verlaufenden Kanalabschnitten 10 vorgesehen, welche die Wand des Extrudergehäuses 1 einensetzen und mit Abschnitten 11' von Kanälen 11 in Filtergehäusen 12 kommunizieren, die am Extrudergehäuse 1 befestigt sind. Jedes Filtergehause 12 hat einen Hohlraum 13, in welchen der jeweilige Kanalabschnitt 11' mündet. In jedem Hohlraum ist zumindest ein Schmelzefilter 14 vorgesehen, das einen beliebigen Aufbau aufweisen kann. So kann das Schmelzefilter aus einem oder mehreren Sieben, also einteilig oder auch mehrteilig ausgebildet sein und es können auch mehrere Filtriereinrichtungen hintereinandergeschaltet sein. Zweckmäßig ist der Einsatz von rückspülbaren und in eine Siebwechselstellung überführbaren Filtern.

Nach Passieren des Schmelzefilters 14 gelangt die Schmelze aus dem Hohlraum 13 in weitere Kanalabschnitte 15 des Filtergehäuses 12 und von diesen über radial verlaufende Kanalabschnitte 16, welche das Extrudergehäuse 1 durchsetzen, in die Kammer 9. Die Einmündungen 16' der Kanalabschnitte 16 liegen dem Rückfördergewinde 7 unmittelbar benachbart. Jene Wand 20 der Kanalabschnitte 10,16, welche dem Rückfördergewinde 7 benachbart ist, kann mit der Stirnfläche 21 des Rückfördergewindes 7 fluchten.

In der Kammer 9 sind in axialen Abstand von den Einmündungen 16' der Kanalabschnitte 16 eine oder mehrere Entgasungsöffnungen 17 vorgesehen, durch die, vorzugsweise unter Vermittlung einer Vakuumpumpe, welche über eine Leitung 22 an die Entgasungsöffnung 17 angeschlossen ist, die sich vom verarbeiteten Kunststoffgut lösenden Gase abgeführt werden. Diese Entgasungsöffnungen 17 können gegebenenfalls durch geeignete Mittel verschließbar ausgebildet sein. Ein solcher Verschluß der Entgasungsöffnungen 17 wird durchgeführt, wenn Kunststoffgut verarbeitet wird, bei welchem keine Gasentwicklung auftritt. In jenem Abschnitt der Länge der Kammer 9, welcher zwischen den Einmündungen 16' der Kanäle 11 und den Entgasungsöffnungen 17 liegt, hat die Extruderschnecke 2 einen Abschnitt mit einer solchen Geometrie, daß eine Druckloszone 18 gebildet wird, die einen Entspannungsraum für das Kunststoffmaterial bildet, so daß die Entgasung begünstigt wird. Wie die Zeichnung zeigt, hat die Schnecke 2 in diesem Abschnitt hiezu zweckmäßig eine stark vergrößerte Gangtiefe. Das über die Einmündungen 16' zugeführte Kunststoffmaterial wird also in dieser Druckloszone 18 im wesentlichen nur gefördert, nicht aber stark unter Druck gesetzt. Die im Kunststoffmaterial enthaltenen Gase haben daher Zeit, aus den Kunststoffmaterial zur Peripherie der Schnecke 2, d.h. zur Innenwand 23 des Extrudergehäuses 1 zu gelangen, von wo sie durch die Entgasungsöffnungen 17 austreten können. Zugleich wird dadurch verhindert, daß Kunststoffschmelze in unerwünschter Weise aus der Kammer 9 durch die Entgasungsöffnungen 17 austritt.

Im Anschluß an die Druckloszone 18 weist die Extruderschnecke 2 eine Austragzone 19 mit gegenüber der Druckloszone 18 verringerter Gangtiefe auf, in welcher Austragzone 19 der für die Überwindung des durch das Werkzeug 6 bewirkten Widerstandes erforderliche Druck aufgebaut wird.

Durch das Rückfördergewinde 7 wird ein geringfügiger Anteil von Schmelze aus der Kammer 9 in die Kammer 8 rückbefördert, wodurch mit Sicherheit vermieden wird, daß Schmelze unter Umgehung der Schmelzefilter 14 aus der Kammer 8 in die Kammer 9 gelangt, wodurch Verunreinigungen und Inhomogenitäten dem Werkzeug 6 zugeführt werden könnten.

Jedes in der Zeichnung lediglich schematisch dargestellte Filtergehäuse 12 kann auf einfache Weise vom Extrudergehäuse 1 gelöst und zur Reinigung bzw. zum Ersatz des Schmelzefilters 14 zerlegt werden.

Gemäß einer vorteilhaften Ausführungsvariante ragt die Stirnfläche 21 des das Rückfördergewinde 7 aufweisenden Abschnittes der Extruderschnecke 2 in die Einmündung 16' vor. Das Ausmaß, um welches diese Stirnfläche 21 in die Einmündung 16' eingreift, ist nur sehr gering, um die Einmündung 16' nicht unnötig abzudecken. Das erwähnte Ausmaß kann daher nur einen Gang des Rückfördergewindes 7 oder nur einen Bruchteil davon betragen. Es wird schon durch eine solche geringfügige Übergreifung sichergestellt, daß der letzte Gang des Rückfördergewindes 7 verläßlich filtriertes Kunststoffmaterial aufnimmt. Auf diese Weise wird sichergestellt, daß das Rückfördergewinde 7 eine einwandfreie Dichtung bewirkt und ständig mit neuem filtriertem Kunststoffmaterial gereinigt wird.

## Patentansprüche

1. Vorrichtung zum Extrudieren von thermoplastischem Kunststoffgut, mit einem Extrudergehäuse (1), in dem eine durch eine Antriebsvorrichtung angetriebene Extruderschnecke (2) um ihre Achse drehbar gelagert ist, und das mit einer, beispielsweise mit einem Trichter (4) verbundenen, Aufgabeöffnung (3) für das zu plastifizierende Gut und mit einer in axialem Abstand von dieser angeordneten Austrittsöffnung (5) für die Schmelze versehen ist und wenigstens eine Entgasungsöffnung (17) für das Entweichen von Gasen sowie wenigstens ein Schmelzefilter (14) aufweist, durch welches die Schmelze hindurchtritt, wobei das Extrudergehäuse (1) durch ein am Schneckenumfang vorgesehenes Rückfördergewinde (7) in zwei Kammern (8,9) unterteilt ist, von welchen eine die Aufgabeöffnung (3) und die andere die Austrittsöffnung (5) aufweist, und die durch wenigstens einen Kanal (11) miteinander verbunden sind, in welchem das Schmelzefilter (14) angeordnet ist, und wobei jede Entgasungsöffnung (17) mit der die Austrittsöffnung (5) aufweisenden Kammer (9) verbunden und in axialem Abstand von dieser Austrittsöffnung (5) angeordnet ist, in welcher Kammer (9) die Extruderschnecke (2) eine eine Druckloszone (18) bewirkende Ganggeometrie hat, dadurch gekennzeichnet, daß jede Entgasungsöffnung (17), in Transportrichtung des Kunststoffgutes gesehen, hinter der Einmündung (16') jedes Kanales (11) in die die Austrittsöffnung (5) aufweisende Kammer (9) liegt, wobei eine Druckloszone (18) zwischen dieser Einmündung (16') und jeder Entgasungsöffung (17) liegt, und daß die Einmündung (16') jedes Kanales (11) in die die Austrittsöffnung (5) aufweisende Kammer (9) unmittelbar neben dem Rückfördergewinde (7) liegt.

2. Vorrichtung nach Anspruch 1, dadurch gekennzeichnet, daß auch die Eintrittsöffnung (10') jedes Kanales (11), welcher von der die Aufgabeöffnung (3) aufweisenden Kammer (8) zu einem Schmelzefilter (14) führt, unmittelbar neben dem Rückfördergewinde (7) angeordnet ist.

3. Vorrichtung nach Anspruch 1 oder 2, dadurch gekennzeichnet, daß die Druckloszone (18) der Extruderschnecke (2) bis zu den Entgasungsöffnungen (17) reicht und daß die Extruderschnecke (2) im Anschluß an die Druckloszone (18) eine eine Austragzone (19) bewirkende Ganggeometrie aufweist, die bis zur Austrittsöffnung (5) reicht.

4. Vorrichtung nach Anspruch 3, dadurch gekennzeichnet, daß die Druckloszone (18) unmittelbar an die in die die Austrittsöffnung (5) aufweisende Kammer (9) mündende Einmündung (16') des Kanales (11) anschließt.

5. Vorrichtung nach einem der Ansprüche 1 bis 4, dadurch gekennzeichnet, daß zumindest eine Entgasungsöffnung (17) verschließbar ist.

6. Vorrichtung nach einem der Ansprüche 1 bis 5, dadurch gekennzeichnet, daß die Wand (20) der Eintrittsöffnung (10') bzw. der Einmündung (16') mit der Stirnfläche (21) des das Rückfördergewinde (7) aufweisenden Abschnittes der Extruderschnecke (2) fluchtet.

7. Vorrichtung nach einem der Ansprüche 1 bis 6, dadurch gekennzeichnet, daß die Kanalabschnitte (10,16), welche die Eintrittsöffnungen (10') bzw. die Einmündungen (16') aufweisen, radial im Extrudergehäuse (1) verlaufen.

8. Vorrichtung nach einem der Ansprüche 1 bis 5 und 7, dadurch gekennzeichnet, daß die Stirnfläche (21) des das Rückfördergewindes (7) aufweisenden Abschnittes der Extruderschnecke (2) die Einmündung (16') geringfügig überlappt.

## Claims

1. A device for extruding thermoplastic material, having an extruder housing (1) in which an extrusion screw (2) driven by a drive device is mounted rotatably about its axis and which is provided with a charging opening (3) connected for example to a funnel (4) for the material to be plasticized and with an outlet opening (5) arranged at a distance axially from the said charging opening (3) for the melt and which comprises at least one de-gassing opening (17) for the escape of gases and at least one melt filter (14) through which the melt passes, wherein the extruder housing (1) is divided by a returning thread (7) provided on the periphery of the screw into two chambers (8, 9), of which one comprises the charging opening (3) and the other the outlet opening (5) and which are connected to each other by at least one duct (11) in which the melt filter (14) is situated, and wherein each de-gassing opening (17) is connected to the chamber (9) provided with the outlet opening (5) and is arranged at a distance axially from the said outlet opening (5), in which chamber (9) the extrusion screw (2) has a pitch geometry producing a pressure-less zone (18), **characterized in that** each de-gassing opening (17), as viewed in the conveying direction of the plastics material, is situated behind the opening (16') of each duct (11) into the chamber (9) provided with the outlet opening (5), wherein a pressure-less zone (18) is present between the said opening (16') and each de-gassing opening (17), and the opening (16') of each duct (11) into the chamber (9) provided with the outlet opening (5) is situated immediately adjacent the returning thread (7).

2. A device according to Claim 1, **characterized in that** the inlet opening (10') of each duct (11), which leads to a melt filter (14) from the chamber (8) provided with the charging opening (3), is also arranged immediately adjacent the return thread (7).

3. A device according to Claim 1 or 2, **characterized in that** the pressure-less zone (18) of the extrusion screw (2) extends as far as the de-gassing openings (17), and adjoining the pressure-less zone (18) the extrusion screw (2) has a pitch geometry producing a discharge zone (19) and extending as far as the outlet opening (5).

4. A device according to Claim 3, **characterized in that** the pressure-less zone (18) immediately adjoins the opening (16') of the duct (11) opening into the chamber (9) provided with the outlet opening (5).

5. A device according to one of Claims 1 to 4, **characterized in that** at least one degassing opening (17) is closable.

6. A device according to one of Claims 1 to 5, **characterized in that** the wall (20) of the inlet opening (10') or the opening (16') is in alignment with the end face (21) of the portion of the extrusion screw (2) provided with the returning thread (7).

7. A device according to one of Claims 1 to 6, **characterized in that** the duct portions (10, 16) which are provided with the inlet openings (10') or the openings (16') extend radially in the extruder housing (1).

8. A device according to one of Claims 1 to 5 and 7, **characterized in that** the end face (21) of the portion of the extrusion screw (2) provided with the returning thread (7) slightly overlaps the opening (16').

## Revendications

1. Dispositif pour l'extrusion de produits thermoplastiques, comprenant une enveloppe d'extrudeuse (1), dans laquelle une vis d'extrudeuse (2) entraînée par un dispositif d'entraînement est montée rotative autour de son axe, dans laquelle sont ménagés un orifice d'alimentation (3) pour la matière à plastifier, relié par exemple à une trémie d'alimentation (4), et un orifice de sortie (5) pour la masse fondue, axialement distant de l'orifice d'alimentation, et qui présente au moins un orifice de dégazage (17) pour l'échappement des gaz ainsi qu'au moins un filtre à masse fondue (14) que traverse la masse fondue, l'enveloppe d'extrudeuse (1) étant divisée en deux chambres (8, 9) par un filetage de retour (7) prévu à la périphérie de la vis d'extrudeuse, l'une des chambres comportant l'orifice d'alimentation (3) et la seconde l'orifice de sortie (5), lesdites chambres étant reliées entre elles par au moins un conduit (11) dans lequel est prévu le filtre à masse fondue (14), chaque orifice de dégazage (17) étant relié à la chambre (9) comportant l'ouverture de sortie (5) et axialement distant dudit orifice de sortie (5), la vis d'extrudeuse (2) présentant dans ladite chambre (9) une géométrie de filet permettant d'obtenir une zone sans pression (18), caractérisé en ce que chaque orifice de dégazage (17), vu dans le sens de transport des produits thermoplastiques, est situé derrière l'embouchure (16') de chaque conduit (11) dans la chambre (9) comportant l'orifice de sortie (5), une zone sans pression (18) étant comprise entre cette embouchure (16') et chaque orifice de dégazage (17), et en ce que l'embouchure (16') de chaque conduit (11) dans la chambre (9) comportant l'orifice de sortie (5) est située directement à proximité du filetage de retour (7).

2. Dispositif selon la revendication 1, caractérisé en ce que l'orifice d'entrée (10') de chaque conduit (11) menant de la chambre (8) comportant l'ouverture d'alimentation (3) à un filtre à masse fondue (14) est également situé directement à proximité du filetage de retour (7).

3. Dispositif selon la revendication 1 ou 2, caractérisé en ce que la zone sans pression (18) de la vis d'extrudeuse (2) s'étend jusqu'aux orifices de dégazage (17) et en ce que la vis d'extrudeuse (2) présente, après la zone sans pression (18), une géométrie de filet s'étendant jusqu'à l'orifice de sortie (5) et permettant d'obtenir une zone de décharge (19).

4. Dispositif selon la revendication 3, caractérisé en ce que la zone sans pression (18) débute directement à l'embouchure (16') du conduit (11) débouchant dans la chambre (9) comportant l'orifice de sortie (5).

5. Dispositif selon l'une des revendications 1 à 4, caractérisé en ce qu'au moins l'un des orifices de dégazage (17) peut être fermé.

6. Dispositif selon l'une des revendications 1 à 5, caractérisé en ce que la paroi (20) de l'orifice d'entrée (10') ou de l'embouchure (16') est alignée avec le bord droit (21) de la portion de la vis d'extrudeuse (2) qui présente le filetage de retour (7).

7. Dispositif selon l'une des revendications 1 à 6, caractérisé en ce que les portions de conduit (10, 16), qui présentent respectivement l'orifice d'entrée (10') et l'embouchure (16'), s'étendent radialement dans l'enveloppe d'extrudeuse (1).

8. Dispositif selon l'une des revendications 1 à 5 ou la revendication 7, caractérisé en ce que le bord droit (21) de la portion de la vis d'extrudeuse (2) présentant le filetage de retour (7) recouvre légèrement l'embouchure (16').
